# EUROPEAN PATENT APPLICATION

(11) **EP 4 667 151 A1**
(43) Date of publication of application: **24.12.2025**
(21) Application number: 25183043.6
(22) Date of filing: 16.06.2025
(51) Int. Cl.: B23Q 3/157, B23B 19/02

(54) **AN ELECTRO-SPINDLE OF THE ATC (AUTOMATIC TOOL CHANGER) TYPE AND A METHOD FOR CHANGING THE TOOL OF AN ELECTRO-SPINDLE OF THE ATC**

(30) Priority: 17.06.2024 IT 202400013816
(71) Applicant: Hiteco S.r.l., 47921 Rimini (RN) (IT)
(72) Inventor: CECCHINI, Lucas, 47921 Rimini (RN) (IT)
(74) Representative: Gallo, Gianluca

(57) **Abstract**

Described is an electro-spindle (E) of the ATC (Automatic Tool Changer) type comprising a tie rod (200) movable between a retaining position, wherein the tie rod (200) is configured to retain a tool, and a release position, wherein it is configured to release the tool, and a joining element (300) coupled to the tie rod (200). The electro-spindle (E) also comprises an inner sleeve (400) fitted on the joining element (300) and configured to slide on the joining element (300) between a rest position, wherein it is moved away from the tie rod (200), and an operating position, wherein it is in contact with the tie rod (200) to cause a passage from the retaining position to the release position. The electro-spindle (E) also comprises an outer sleeve (500) fitted around the inner sleeve (400) and movable by translation between an inactive position, wherein it is moved away from the tie rod (200), and an active position, wherein it is in contact with the tie rod (200) to cause a passage from the retaining position to the release position. The electro-spindle (E) also comprises a gasket (700) fitted around the inner sleeve (400) and configured to slide along the inner sleeve (400) when the outer sleeve (500) is moved from the inactive position to the active position.

## Description

This invention relates to an electro-spindle of the ATC type (Atomatic Tool Changer) and a method for changing the tool of an electro-spindle of the ATC type.

As is known, the electro-spindles of the ATC type are electro-mechanical devices mounted on machine tools and provided with an internal motor which is able to generate the rotation of any tool installed on the electro-spindle so as to perform the planned machining. The electro-spindles of the ATC type are also able to perform a tool-changing operation automatically in such a way that the tool mounted on the spindle can be replaced with another tool.

More in detail, the electro-spindles of the ATC type usually comprise a rotary shaft, a motor operatively connected (for example, directly connected or connected by a transmission system) to the rotary shaft to cause a rotation and a tie rod at the end of which is reversibly coupled a tool. The tie rod is inserted inside the rotary shaft to rotate as one with the rotary shaft. The tie rod is also configured, when a tool change is to be performed, to be translated from a first position, in which it retains the tool, to a second position, in which it releases the tool in such a way as to allow the assembly of a new tool.

As is known, the electro-spindles of the ATC type may also comprise a mechanical joint coupled to the tie rod and configured to allow the passage of a working fluid from a source of an operating fluid to the tool when the latter is rotated. In particular, the mechanical joint may be present, for example, if it is desired to perform certain types of machining in which it is necessary, for example, to supply fluid to the tool for its lubrication-cooling.

During use of the electro-spindle, that is to say, when the tool is rotated, it is in effect necessary for a pressurised operating fluid, for example air, oil, water or a mix of these, to be supplied to the tool in such a way as to allow a correct operation of the tool, for example in such a way as to allow its cooling. In this situation, the need is particularly felt to prevent the operating fluid from being dispersed in the electro-spindle both during operation of the spindle and, and especially, during the tool changing operation, that is to say, during the translation of the tie rod.

There are currently prior art electro-spindles provided with different mechanical joints such as, for example, front sealed joints, so-called disposable joints and the like.

Disadvantageously, the above-mentioned types of joints are not able to control, or in any case are not efficient in controlling, operating fluids of the lubricating-cooling type such as, for example, water and oil, when high pressures for the fluid and/or high rotation speeds for an electro-spindle are used.

In this situation, in the prior art electro-spindles there is the risk that the operating fluid, during the tool changing operations, is dispersed inside the electro-spindle causing breakages and malfunctions.

The technical purpose of the invention is therefore to provide an electro-spindle of the ATC type and a method for changing the tool of an electro-spindle of the ATC type which are able to overcome the drawbacks of the prior art.

The aim of the invention is therefore to provide an electro-spindle of the ATC type which is able to prevent unwanted escape of the operating fluid during a tool-change operation.

A further aim of the invention is to provide an electro-spindle of the ATC type which is reliable and resistant.

A further aim of the invention is to provide a method for changing the tool of an electro-spindle of the ATC type which is efficient and reliable.

The technical purpose indicated and the aims specified are substantially achieved by an electro-spindle of the ATC type and by a method for changing the tool of an electro-spindle of the ATC type comprising the technical features described in one or more of the appended claims. The dependent claims correspond to possible embodiments of the invention.

In particular, the technical purpose indicated and the aims specified are achieved by an electro-spindle of the ATC "Automatic Tool Changer" type comprising a rotary shaft extending along an axis of extension and a motor operatively connected to the rotary shaft to cause a rotation about the axis of extension.

The electro-spindle also comprises a tie rod extending along the axis of extension between a first end, configured to reversibly engage a tool, and a second end. The tie rod is rotatable as one with the rotary shaft. The tie rod is also movable, preferably translated, along the axis of extension between a retaining position, wherein the tie rod is configured to retain the tool, and a release position, wherein the tie rod is configured to release the tool.

Preferably, the tie rod is movable between the retaining position and the release position when it does not rotate, that is to say, when the electro-spindle needs a tool change.

The tie rod is hollow for allowing the passage of a operating fluid towards the tool.

The electro-spindle also comprises a hollow joining element extending along the axis of extension between a first end, coupled to the second end of the tie rod in such a way that the joining element is movable in rotation as one with the tie rod and a second end connectable to a source of the operating fluid. The joining element places in fluid-dynamic communication the source of the operating fluid and the tie rod to allow the passage of the operating fluid towards the tool.

The electro-spindle also comprises an inner sleeve fitted on the joining element in such a way that the inner sleeve is rotationally integral with the joining element.

Preferably, the electro-spindle comprises at least one connecting means configured for connecting the inner sleeve to the second end of the tie rod in such a way that the inner sleeve is integral in rotation with the tie rod. Preferably, the at least one connecting means is a pin.

The inner sleeve is configured to slide on the joining element, along the axis of extension, between a rest position, wherein it is moved away from the second end of the tie rod, and an operating position, wherein it is in contact with the second end of the tie rod to cause a passage of the tie rod from the retaining position to the release position.

Preferably, the electro-spindle comprises a stop ring, for example a Seeger ring, interposed between the inner sleeve and the joining element. Preferably, the electro-spindle also comprises at least one elastic return means, for example a spring, connected to the inner sleeve and to the second end of the tie rod and configured to cause a translation of the inner sleeve from the operating position to the rest position.

Preferably, the electro-spindle also comprises a stop ring, for example a Seeger ring, fitted on the second end of the joining element and configured to define a stop-stroke for the inner sleeve when the inner sleeve translates between from the operating position and to the rest position.

Preferably, the inner sleeve comprises a first portion with a larger diameter extending, along the axis of extension, between a first contact surface configured, in the operating position, for making contact with the second end of the tie rod and a second contact surface, opposite the first contact surface. The inner sleeve also comprises a second portion with a reduced diameter axially spaced from the first portion with a larger diameter.

The electro-spindle also comprises an outer sleeve fitted around the inner sleeve and movable by translation, along said axis of extension, between an inactive position, wherein it is moved away from the second end of the tie rod, and an active position, wherein it is in contact with the second end of the tie rod for causing a passage of the tie rod from the retaining position to the release position.

The electro-spindle also comprises a pneumatic actuation cylinder positioned facing the second end of the tie rod and configured to cause the translation movement of the outer sleeve. A hydraulic cylinder or a cam mechanism might also be used, for example, to cause the translation movement of the outer sleeve.

Preferably, the outer sleeve has a first portion with larger diameter integral with the pneumatic actuation cylinder and a second portion with reduced diameter axially spaced from the first portion with a larger diameter and extending towards the second end of the tie rod.

The electro-spindle also comprises a gasket, for example a lip gasket, fitted around the inner sleeve.

Preferably, the gasket is positioned between the outer sleeve and the inner sleeve.

Preferably, the gasket is made, at least partly, of a Fluoroloy blend. More preferably, the gasket comprises a metallic supporting structure and a lip made of a Fluoroloy blend.

The gasket is configured to allow a rotation of the inner sleeve relative to the outer sleeve. The gasket is also configured to slide along the inner sleeve when the outer sleeve is moved from the inactive position to the active position.

Preferably, during the translation of the outer sleeve from the inactive position to the active position, the outer sleeve intercepts the inner sleeve causing the translation of the inner sleeve from the rest position to the operating position.

Preferably, the outer sleeve is configured to adopt an intermediate position between the inactive position and the active position, wherein the outer sleeve is in contact with the inner sleeve in the rest position. In this situation, the gasket is configured to slide on the inner sleeve during the movement of the outer sleeve from the inactive position to the intermediate position. In this situation, during the translation of the outer sleeve from the intermediate position to the active position, said inner sleeve, the outer sleeve and the gasket are movable as one by translation.

According to the preferred embodiment, the second portion with reduced diameter of the outer sleeve is provided internally with an annular rib configured to make contact with the second contact surface of the inner sleeve when the outer sleeve passes from the inactive position to the active position. In this situation, the gasket is fitted on the second portion with reduced diameter of the inner sleeve and is laterally in contact with the annular rib. The annular rib is interposed between the first portion with larger diameter of the inner sleeve and the gasket.

The technical purpose indicated and the aims specified are also achieved by a method for changing the tool of an electro-spindle of the ATC "Automatic Tool Changer" type comprising a step of preparing an electro-spindle.

The electro-spindle comprises a tie rod extending along an axis of extension between a first en, configured to reversibly engage a tool, and a second end.

The electro-spindle comprises a hollow joining element extending along the axis of extension between a first end coupled to the second end of the tie rod and a second end connectable to a source of an operating fluid for putting in fluid-dynamic communication the source of the operating fluid and the tie rod.

The electro-spindle also comprises an inner sleeve fitted on the joining element and configured to slide on the joining element along the axis of extension.

The electro-spindle comprises an outer sleeve fitted around the inner sleeve and movable by translation along the axis of extension and a pneumatic actuation cylinder configured to cause the translation movement of the outer sleeve.

The electro-spindle also comprises a gasket fitted around the inner sleeve and configured to slide along the inner sleeve when the outer sleeve is moved by translation.

The method comprises a step of activating the pneumatic actuation cylinder and a step of translating the outer sleeve from an inactive position, wherein it is moved away from the second end of the tie rod, to an active position, wherein it is in contact with the second end of the tie rod.

During the step of moving the outer sleeve, the gasket slides in contact with the inner sleeve.

The method also comprises a step of translating the inner sleeve from a rest position, wherein it is moved away from the second end of the tie rod, to an operating position, wherein it is in contact with the second end of the tie rod.

In the step of moving the outer sleeve, the outer sleeve intercepts the inner sleeve causing the translation movement

Subsequently, the method comprises a step of translating the tie rod from a retaining position, wherein it is configured to retain the tool, to a release position, wherein it is configured to release the tool.

Further features and advantages of the invention are more apparent in the non-limiting description which follows of a non-exclusive embodiment of an electro-spindle of the ATC type and a method for changing the tool of an electro-spindle of the ATC type.

This description is set out below with reference to the accompanying drawings which are provided solely for illustrative and therefore non-limiting purposes, in which:
- Figure 1 shows a cross-section of a part of the electro-spindle according to the invention in a first configuration;
- Figure 2 shows a cross-section of a part of the electro-spindle according to the invention in a second configuration;
- Figure 3 shows a cross-section of a part of the electro-spindle according to the invention in a third configuration;

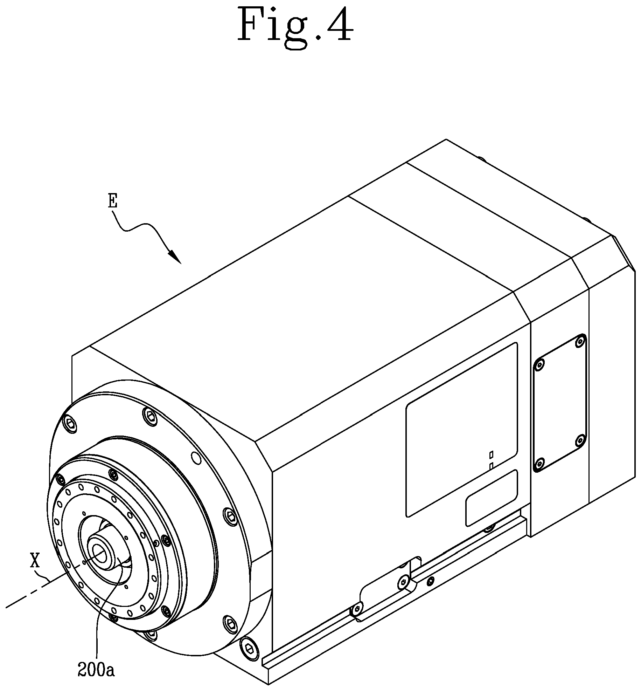

- Figure 4 shows a perspective view of the electro-spindle according to the invention.

With reference to the accompanying drawings, the reference "E" denotes an electro-spindle of the ATC type "Automatic Tool Changer".

The electro-spindle "E" comprises a rotary shaft 100 extending along an axis of extension "X" and a motor operatively connected to the rotary shaft 100 to cause a rotation about the axis of extension "X".

The electro-spindle "E" also comprises a tie rod 200 extending along the axis of extension "X" between a first end 200a, configured to reversibly engage a tool, and a second end 200b.

In accordance with the embodiment illustrated in the accompanying drawings, the tie rod 200 is inserted inside the rotary shaft 100.

The tie rod 200 is rotatable as one with the rotary shaft 100. In this situation, when the electro-spindle "E" is in use, the motor rotates both the rotary shaft 100 and the tie rod 200 and the latter, being integral with the tool, rotates the tool.

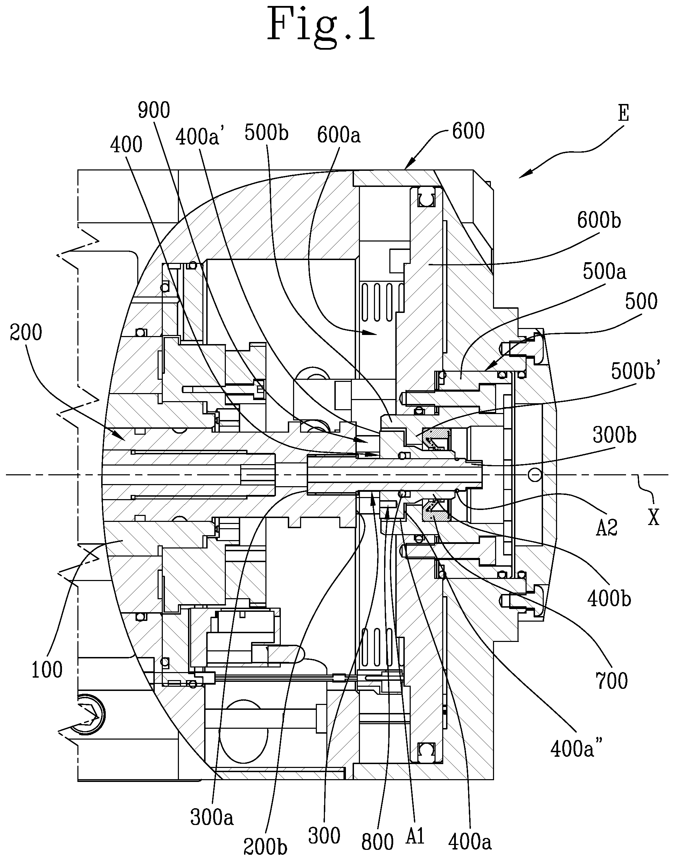

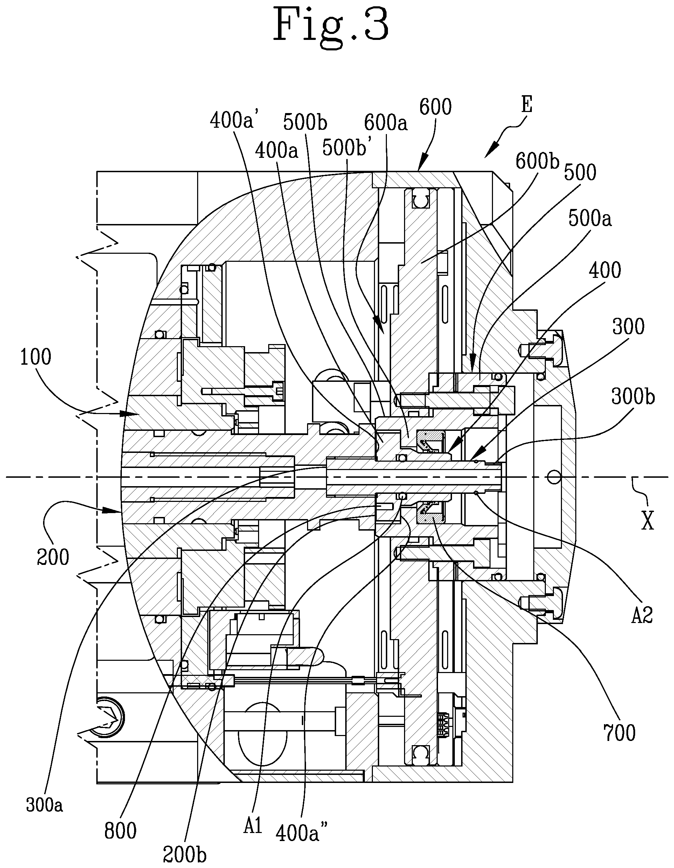

The tie rod 200 is also movable, preferably translated, along the axis of extension "X" between a retaining position (Figure 1) and a release position (Figure 3).

In the retaining position, the tie rod 200 is configured for retaining the tool, that is to say, the tool is integral with the tie rod 200.

In the release position, on the other hand, the tie rod 200 is configured to release the tool, that is to say, the tool is uncoupled from the first end 200a of the tie rod. In this situation, once the tool has been released, it is possible to mount in its place a new tool and return the tie rod 200 to the retaining position in such a way that the tie rod 200 retains the new tool.

In other words, if it is necessary to perform a tool change, the tie rod 200 is translated from the retaining position to the release position, the tool is replaced and the tie rod 200 is then returned to the retaining position in such a way that, when the motor is reactivated, the tool rotates together with the tie rod 200.

As shown in the accompanying drawings, the tie rod 200 is hollow for allowing the passage of an operating fluid, for example water, oil or a mixture of them, towards the tool, as described below.

The electro-spindle "E" also comprises a hollow joining element 300.

The joining element 300 extends along the axis of extension "X" between a first end 300a coupled to the second end 200b of the tie rod 200 in such a way that the joining element 300 is movable in rotation as one with the tie rod 200, and a second end 300b connectable to a source of the operating fluid.

The joining element 300 places in fluid-dynamic communication the source of the operating fluid and the tie rod 200 to allow the passage of the operating fluid towards the tool.

According to the preferred embodiment, the second end 300b of the joining element 300 is connected to a hydro-pneumatic connector, for example of the John Guest type, in such a way as to allow the passage of the operating fluid from the source to the tool.

According to the embodiment illustrated, the joining element 300 and the tie rod 200 are two separate elements and the first end 300a of the joining element 300 is connected to the second end 200b of the tie rod 200. According to an embodiment not illustrated, on the other hand, the joining element 300 defines an extension of the tie rod 200 on the side of the second end 200b of the tie rod 200. In this situation, the joining element 300 and the tie rod 200 are made as one.

The electro-spindle "E" also comprises an inner sleeve 400 fitted on the joining element 300 in such a way that the inner sleeve 400 is rotationally integral with the joining element 300.

Preferably, as shown in the accompanying drawings, the electro-spindle "E" comprises a seal ring "A1", preferably an O-ring, interposed between the inner sleeve 400 and the joining element 300.

With reference to the embodiment illustrated, the electro-spindle "E" comprises at least one connecting means 800, preferably a pin, configured for connecting the inner sleeve 400 to the second end 200b of the tie rod 200 in such a way that the inner sleeve 400 is integral in rotation with the tie rod 200.

In use, therefore, when the electro-spindle "E" is activated to perform a machining, the tie rod 200 (together with the tool) and the joining element 300 are moved in rotation. In this situation, since the inner sleeve 400 is fitted on the joining element 300 and connected to the tie rod 200, the inner sleeve 400 is also moved in rotation.

The inner sleeve 400 is also configured to slide on the joining element 300, along the axis of extension "X", between a rest position (Figure 1), wherein it is moved away from the second end 200b of the tie rod 200, and an operating position (Figure 3), wherein it is in contact with the second end 200b of the tie rod 200 to cause a passage of the tie rod 200 from the retaining position to the release position.

More in detail, at the moment of the tool change-over, the motor is deactivated and the rotary shaft 100, the tie rod 200 and the joining element 300 do not rotate. In this situation, the inner sleeve 400 is translated, as described in detail below, along the joining element 300, from the rest position to the operating position in such a way as to cause the translation of the tie rod 200 from the retaining position to the release position and thus allow the tool to be changed.

With reference to the embodiment illustrated, the inner sleeve 400 comprises a first portion 400a with a larger diameter extending, along the axis of extension "X", between a first contact surface 400a' configured, in the operating position, for making contact with the second end 200b of the tie rod 200 and a second contact surface 400a", opposite the first contact surface 400a'.

The inner sleeve 400 also comprises a second portion 400b with a reduced diameter axially spaced from the first portion 400a with a larger diameter.

As shown in the accompanying drawings, the second portion 400b with reduced diameter extends along the axis of extension "X" starting from the second contact surface 400a".

The electro-spindle "E" also comprises an outer sleeve 500 fitted around the inner sleeve 400 and movable by translation, along the axis of extension "X", between an inactive position (Figure 1) and an active position (Figure 3).

In the inactive position, the outer sleeve 500 is moved away from the second end 200b of the tie rod 200.

In the active position, the outer sleeve 500 is in contact with the second end 200b of the tie rod 200 to cause a passage of the tie rod 200 from the retaining position to the release position.

In order to cause the above-mentioned translation of the outer sleeve 500, the electro-spindle "E" comprises a pneumatic actuation cylinder 600, positioned facing the second end 200b of the tie rod 200.

According to the preferred embodiment, the pneumatic actuation cylinder 600 comprises a containment chamber 600a and a plate 600b inserted in the containment chamber 600a. In particular, the containment chamber 600a is divided into a first and a second sub-chamber by the plate 600b. The plate 600b is integral with the outer sleeve 500 and can be activated by translation along the axis of extension "X", in one direction or the other, following an introduction of air, respectively, in the first sub-chamber or in the second sub-chamber of the containment chamber 600a, in such a way as to cause the translation of the outer sleeve 500 in both directions. According to a further example, the plate 600b is integral with the outer sleeve 500 and can be activated by translation along the axis of extension "X", in one direction, following an introduction of air in the first sub-chamber of the containment chamber 600a, and in the other direction, by means of return springs, in such a way as to cause the translation of the outer sleeve 500 in both directions.

At the moment of tool change, the air is introduced into the first sub-chamber of the containment chamber 600a, in such a way that the plate 600b translates. In this situation, since the outer sleeve 500 is integral with the plate 600b, the outer sleeve 500 is also moved by translation from the inactive position to the active position.

During the translation of the outer sleeve 500 from the inactive position to the active position, the outer sleeve 500 intercepts the inner sleeve 400 causing the translation of the inner sleeve 400 from the rest position to the operating position.

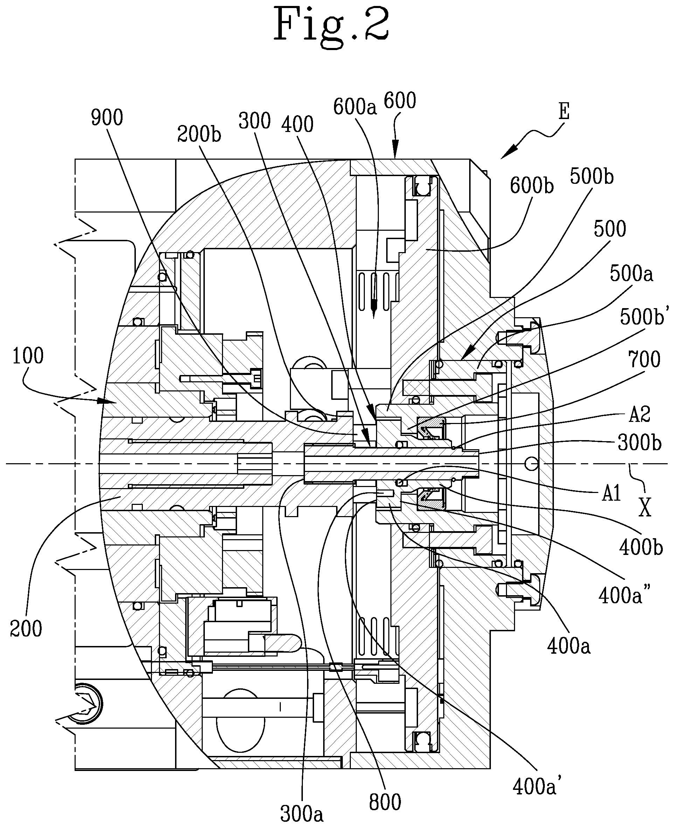

In other words, whilst the outer sleeve 500 passes from the inactive position to the active position, it intercepts the inner sleeve 400 pulling the latter in translation along the axis of extension "X". In this situation, when the outer sleeve 500 intercepts the inner sleeve 400, they move integrally by translation towards the second end 200b of the tie rod 200. In that way, at the end of the translation, the outer sleeve 500 is in the active position whilst the inner sleeve 400 is in the operating position (Figure 3). According to an aspect of the invention, the outer sleeve 500 is also configured to adopt an intermediate position (Figure 2) between the inactive position and the active position.

In the intermediate position, the outer sleeve 500 is in contact with the inner sleeve 400 in the rest position (Figure 2).

As mentioned above, during the translation of the outer sleeve 500 from the inactive position to the active position, the outer sleeve 500 intercepts the inner sleeve 400. At the moment of intercepting, the outer sleeve 500 is in the intermediate position whilst the inner sleeve 400 is in the rest position. Continuing its translational motion, that is to say, its motion from the intermediate position to the active position, the outer sleeve 500 causes the translation of the inner sleeve 400 from the rest position to the operating position.

During the movement of the outer sleeve 500 from the intermediate position to the active position, the outer sleeve 500 and the inner sleeve 400 translate in an integral fashion with each other.

With reference to the embodiment illustrated, the outer sleeve 500 has a first portion 500a with a larger diameter integral with the pneumatic actuation cylinder 600.

Preferably, the first portion 500a with larger diameter is integral with the plate 600b of the actuator cylinder 600.

The outer sleeve 500 also has a second portion 500b with a reduced diameter, axially spaced from the first portion 500a with a larger diameter and extending towards the second end 200b of the tie rod 200. Preferably, the plate 600b of the actuator cylinder 600 is fitted around the second portion 500b with reduced diameter in such a way as to be laterally in contact with the first portion 500a with a larger diameter.

With reference to the embodiment shown in the accompanying drawings, the second portion 500b with a reduced diameter of the outer sleeve 500 is provided internally with an annular rib 500b' configured for making contact with the second contact surface 400a" of the inner sleeve 400 when the outer sleeve 500 passes from the inactive position to the active position (Figure 2).

The electro-spindle "E" also comprises a gasket 700 positioned around the inner sleeve 400.

According to the embodiment illustrated, the gasket 700 is positioned between the outer sleeve 500 and the inner sleeve 400.

According to the embodiment illustrated, the gasket 700 is fitted on the second portion 400b with a reduced diameter of the inner sleeve 400 and is laterally in contact with the annular rib 500b'. In this situation, the annular rib 500b' is interposed, along the axis of extension "X", between the first portion 400b with a larger diameter of the inner sleeve 400 and the gasket 700.

Preferably, the gasket 700 is a lip gasket.

Preferably, but not necessarily, the gasket is made, at least partly, of a Fluoroloy blend. More preferably, the gasket comprises a metallic supporting structure and a lip made of a Fluoroloy blend.

The gasket 700 is configured to allow a rotation of the inner sleeve 400 relative to the outer sleeve 500.

In effect, in use, when the electro-spindle "E" is operating, the gasket 700 allows a rotation of the inner sleeve 400 (integral with the joining element 300 and, therefore, with the tie rod 200) whilst the outer sleeve 500 remains stationary.

The gasket 700 is also configured to slide along the inner sleeve 400 when the outer sleeve 500 is moved from the inactive position to the active position.

At the moment of the tool-change, therefore, during the movement of the outer sleeve 500 from the inactive position to the intermediate position, the gasket 700 is configured to slide on the inner sleeve 400, and more precisely, on its second portion 400b with a reduced diameter.

Once the outer sleeve 500 has intercepted the inner sleeve 400, that is to say, once the outer sleeve 500 has reached the intermediate position, the gasket 700, the inner sleeve 400 and the outer sleeve 500 are integral and translate towards the second end 200b of the tie rod 200. In that way, during the translation of the outer sleeve 500 from the intermediate position to the active position, the inner sleeve 400, the outer sleeve 500 and the gasket 700 are movable as one by translation.

In use, therefore, during a tool change of the electro-spindle "E", the pneumatic actuation cylinder 600 is activated, that is to say, pressurised air is introduced into the first sub-chamber of the containment chamber 600a, in such a way that the plate 600b is moved along the axis of extension "X". Since the outer sleeve 500 is integral with the plate 600b, the outer sleeve 500 is also moved by translation along the axis of extension "X". In this situation, during the translation of the outer sleeve 500 from the inactive position to the intermediate position, the gasket 700 translates along the inner sleeve 400, and more precisely along its second portion 400b with a reduced diameter.

When the outer sleeve 500 is in the intermediate position, the annular rib 500b' is in contact with the second contact surface 400a" of the inner sleeve 400 and pushes the latter in translation (Figure 2).

The outer sleeve 500, guided by the plate 600b, continues its translation towards the active position (it should be noted that the movement of the outer sleeve 500 from the inactive position to the active position is a continuous stroke which passes through the adoption of the intermediate position). In this situation, the outer sleeve 500, the gasket 700 and the inner sleeve 400 move as one in translation towards the second end 200b of the tie rod 200 (Figure 3). More in detail, during the stroke of the outer sleeve 500 from the intermediate position to the active position (which coincides with the stroke of the inner sleeve 400 from the rest position to the operating position), there is no relative motion between the outer sleeve 500 and the inner sleeve 400.

Once the outer sleeve 500 and the inner sleeve 400 are in contact with the second end 200b of the tie rod 200, the tie rod 200 passes from the retaining position to the release position. In this situation, the tool connected to the first end 200a of the tie rod 200 is replaced by a new tool.

In order to render the new tool integral with the tie rod 200, that is to say, for returning the tie rod 200 to the retaining position, the pneumatic actuation cylinder 600 is again activated, that is to say, pressurised air is introduced into the second sub-chamber of the containment chamber 600a, in such a way that the plate 600b is moved along the axis of extension "X" in the opposite direction to before. Since the outer sleeve 500 is integral with the plate 600b, the outer sleeve 500 is also moved by translation along the axis of extension "X". In this situation, the outer sleeve 500 translates, in the opposite direction to before, in such a way as to pass from the active position to the inactive position. As already mentioned, according to another example, the translation of the plate 600b could be performed under the pushing action of return springs.

Simultaneously with the translation of the outer sleeve 500 from the active position to the inactive position, the inner sleeve 400 also translates from the operating position to the rest position.

In more detail, the outer sleeve 500, the inner sleeve 400 and the gasket 700 are integral with each other and translate during the stroke of the outer sleeve 500 from the active position to the intermediate position (which coincides with the stroke of the inner sleeve 400 from the operating position to the rest position). During the movement of the outer sleeve 500 from the intermediate position to the inactive position, on the other hand, the inner sleeve 400 is stationary.

In order to move the inner sleeve 400 from the operating position to the rest position, the electro-spindle "E" comprises at least one elastic return means 900 connected to the inner sleeve 400 and to the second end 200b of the tie rod 200 and configured to cause a translation of the inner sleeve 400 from the operating position to the rest position.

Preferably, the at least one elastic return means 900 is a spring.

In order to prevent the inner sleeve 400, during its translation towards the rest position, from sliding out from the joining element 300, the electro-spindle "E" also comprises a mechanical contact element "A2", preferably a stop ring, more preferably a Seeger ring or a nut, fitted on the second end 300b of the joining element 300 and configured to define a stop-stroke for the inner sleeve 400 when the inner sleeve 400 translates between the operating position and the rest position.

This invention also relates to a method for changing the tool of an electro-spindle of the ATC (Atomatic Tool Changer) type.

The method comprises a step of preparing an electro-spindle "E" comprising a tie rod 200 extending along an axis of extension "X" between a first end 200a, configured to reversibly engage a tool, and a second end 200b.

The electro-spindle "E" comprises a hollow joining element 300 extending along the axis of extension "X" between a first end 300a coupled to the second end 200b of the tie rod 200 and a second end 300b connectable to a source of the operating fluid for putting in fluid-dynamic communication the source of the operating fluid and the tie rod 200.

The electro-spindle "E" also comprises an inner sleeve 400 fitted on the joining element 300 and configured to slide on the joining element 300 along the axis of extension "X".

The electro-spindle "E" also comprises an outer sleeve 500 fitted around the inner sleeve 400 and movable by translation along the axis of extension "X".

The electro-spindle "E" also comprises a pneumatic actuation cylinder 600 configured to cause the translation of the outer sleeve 500 and a gasket 700 fitted around the inner sleeve 400 and configured for sliding along the inner sleeve 400 when the outer sleeve 500 is translated.

The method also comprises a step of activating the pneumatic actuation cylinder 600.

The method also comprises a step of translation of the outer sleeve 500 from an inactive position, wherein it is moved away from the second end 200b of the tie rod 200, to an active position, wherein it is in contact with the second end 200b of the tie rod 200.

More in detail, when the pneumatic cylinder 600 is activated, the outer sleeve 500 is translated along the axis of extension "X" from the inactive position to the active position.

During the step of moving the outer sleeve 500 from the inactive position to the active position, the gasket 700 is configured for sliding in contact with the inner sleeve 400.

The method also comprises a step of translation of the inner sleeve 400 from a rest position, wherein it is moved away from the second end 200b of the tie rod 200, to an operating position, wherein it is in contact with the second end 200b of the tie rod 200.

In the step of moving the outer sleeve 500, the outer sleeve 500 intercepts the inner sleeve 400 causing the translation movement.

More in detail, during the movement from the inactive position to the active position, the outer sleeve 500 intercepts the inner sleeve 400 translating the latter in such a way that it passes from the rest position to the operating position. In this situation, for a first stretch of translation stroke of the outer sleeve 500 between the inactive position and the active position, the inner sleeve 400 is stationary and the gasket 700 moves as one with the outer sleeve 500 sliding along the inner sleeve 400 whilst, for a second stretch translation stroke of the outer sleeve 500 between the inactive position and the active position, the inner sleeve 400 is translated from the rest position to the operating position. During this second stretch of stroke (which coincides with the translation of the inner sleeve 400 from the rest position to the operating position), the outer sleeve 500, the gasket 700 and the inner sleeve 400 translate as one with each other along the axis of extension "X" until the outer sleeve 500 is in the active position and the inner sleeve 400 is in the operating position.

In other words, during the movement of the inner sleeve 400 from the rest position to the operating position, the inner sleeve 400 and the outer sleeve 500 translate as one with each other until reaching, respectively, the operating position and the active position.

After the outer sleeve 500 reaches the active position and the inner sleeve 400 reaches the operating position, the method comprises a step of translation, along the axis of extension "X", of the tie rod 200 from a retaining position, wherein it is configured to retain the tool, to a release position, wherein it is configured to release the tool.

In this way, the tool is released and a new tool can be mounted on the tie rod 200.

The invention achieves the preset aims overcoming the drawbacks of the prior art.

In particular, the electro-spindle according to this invention avoids the escape of the operating fluid even during tool changing operations and is reliable and efficient.

## Claims

1. An electro-spindle (E) of the ATC (Automatic Tool Changer) type, comprising:
- a rotary shaft (100) extending along an axis of extension (X);
- a motor operatively connected to said rotary shaft (100) for causing a rotation about the axis of extension (X);
- a tie rod (200) extending along the axis of extension (X) between a first end (200a), configured to reversibly engage a tool, and a second end (200b), the tie rod (200) being rotatable as one with said rotary shaft (100), said tie rod (200) also being movable along the axis of extension (X) between a retaining position, wherein said tie rod (200) is configured for retaining the tool, and a release position, wherein said tie rod (200) is configured for releasing said tool, said tie rod (200) being hollow for allowing the passage of an operating fluid towards the tool;
- a hollow joining element (300) extending along said axis of extension (X) between a first end (300a) coupled to the second end (200b) of said tie rod (200) in such a way that said joining element (300) is movable in rotation as one with the tie rod (200), and a second end (300b) connectable to a source of the operating fluid, said joining element putting in fluid-dynamic communication said source of the operating fluid and said tie rod (200) to allow the passage of the operating fluid towards the tool;
- an inner sleeve (400) fitted on the joining element (300) in such a way that said inner sleeve (400) is rotationally integral with said joining element (300), said inner sleeve (400) being configured to slide on the joining element (300), along the axis of extension (X), between a rest position, wherein it is moved away from said second end (200b) of the tie rod (200), and an operating position, wherein it is in contact with said second end (200b) of the tie rod (200), for causing a passage of the tie rod (200) from the retaining position to the release position;
- an outer sleeve (500) fitted around the inner sleeve (400) and movable by translation, along said axis of extension (X), between an inactive position, wherein it is moved away from the second end (200b) of the tie rod (200), and an active position, wherein it is in contact with the second end (200b) of the tie rod (200) for causing a passage of the tie rod (200) from the retaining position to the release position;
- a pneumatic actuation cylinder (600), positioned facing the second end (200b) of the tie rod (200) and configured to cause said translation movement of the outer sleeve (500);
- a gasket (700) fitted around the inner sleeve (400), said gasket (700) being configured to allow a rotation of the inner sleeve (400) with respect to said outer sleeve (500), said gasket (700) also being configured to slide along the inner sleeve (400) when the outer sleeve (500) is moved from the inactive position to the active position.

2. The electro-spindle according to claim 1, wherein during the translation of said outer sleeve (500) from the inactive position to the active position, said outer sleeve (500) intercepts the inner sleeve (400) causing the translation of the inner sleeve (400) from the rest position to the operating position.

3. The electro-spindle according to claim 1 or 2, wherein said outer sleeve (500) is configured to adopt an intermediate position between said inactive position and said active position, wherein the outer sleeve (500) is in contact with said inner sleeve (400) in the rest position, said gasket (700) being configured to slide on said inner sleeve (400) during the movement of the outer sleeve (500) from the inactive position to the intermediate position.

4. The electro-spindle according to claim 3, wherein during the translation of the outer sleeve (500) from the intermediate position to the active position, said inner sleeve (400), said outer sleeve (500) and said gasket (700) are movable as one by translation.

5. The electro-spindle according to any one of the preceding claims, comprising at least one connecting means (800), preferably a pin, configured for connecting said inner sleeve (400) to the second end (200b) of the tie rod (200) in such a way that said inner sleeve (400) is integral in rotation with said tie rod (200).

6. The electro-spindle according to any one of the preceding claims, comprising at least one elastic return means (900) connected to said inner sleeve (400) and to the second end (200b) of the tie rod (200) and configured for causing a translation of the inner sleeve (400) from the operating position to the rest position, preferably said at least one elastic return means (900) being a spring.

7. The electro-spindle according to any one of the preceding claims, comprising a seal ring (A1), preferably an O-ring
, interposed between the inner sleeve (400) and the joining element (300).

8. The electro-spindle according to any one of the preceding claims, comprising a mechanical contact element (A2), preferably a stop ring, more preferably a Seeger ring or a nut, fitted on the second end (300b) of the joining element (300) and configured to define a stop-stroke for the inner sleeve (400) when said inner sleeve (400) translates from the operating position to the rest position.

9. The electro-spindle according to any one of the preceding claims, wherein said outer sleeve (500) has:
- a first portion (500a) with a larger diameter integral with said pneumatic actuation cylinder (600);
- a second portion (500b) with a reduced diameter, axially spaced from the first portion (500a) with a larger diameter and extending towards the second end (200b) of the tie rod (200).

10. The electro-spindle according to any one of the preceding claims, wherein the inner sleeve (400) comprises:
- a first portion (400a) with a larger diameter extending, along the axis of extension (X), between a first contact surface (400a') configured, in the operating position, for making contact with the second end (200b) of the tie rod (200) and a second contact surface (400a"), opposite the first contact surface (400a');
- a second portion (400b) with a reduced diameter, axially spaced from the first portion (400a) with a larger diameter.

11. The electro-spindle according to claim 9 or 10, wherein said second portion (500b) with a reduced diameter of the outer sleeve (500) is provided internally with an annular rib (500b') configured for making contact with said second contact surface (400a") of the inner sleeve (400) when said outer sleeve (500) passes from the inactive position to the active position.

12. The electro-spindle according to claim 11, wherein said gasket (700) is fitted on the second portion (400b) with a reduced diameter of the inner sleeve (400) and is laterally in contact with said annular rib (500b'), said annular rib (500b') being interposed between the first portion (400b) with a larger diameter of the inner sleeve (400) and said gasket (700).

13. The electro-spindle according to any one of the preceding claims, wherein said gasket (700) is made, at least partly, of a Fluoroloy blend, preferably, the gasket comprising a metal supporting structure and a lip made of Fluoroloy blend.

14. The electro-spindle according to any one of the preceding claims, wherein said gasket (700) is positioned between the outer sleeve (500) and the inner sleeve (400).

15. A method for changing the tool of an electro-spindle of the ATC (Automatic Tool Changer) type, comprising the following steps:
- preparing an electro-spindle (E) comprising:
- a tie rod (200) extending along an axis of extension (X) between a first end (200a), configured to reversibly engage a tool, and a second end (200b);
- a hollow joining element (300) extending along said axis of extension (X) between a first end (300a) coupled to the second end (200b) of said tie rod (200) and a second end (300b) connectable to a source of the operating fluid for putting in fluid-dynamic communication said source of the operating fluid and said tie rod (200);
- an inner sleeve (400) fitted on the joining element (300) and configured to slide on the joining element (300) along the axis of extension (X);
- an outer sleeve (500) fitted around the inner sleeve (400) and movable by translation along said axis of extension (X);
- a pneumatic actuation cylinder (600), configured to cause said translation movement of the outer sleeve (500);
- a gasket (700) fitted around the inner sleeve (400) and configured to slide along the inner sleeve (400) when the outer sleeve (500) is moved by translation;
- activating the pneumatic actuation cylinder (600);
- translating said outer sleeve (500) from an inactive position, wherein it is moved away from the second end (200b) of the tie rod (200), to an active position, wherein it is in contact with the second end (200b) of the tie rod (200);
- translating the inner sleeve (400) from a rest position, wherein it is moved away from said second end (200b) of the tie rod (200), to an operating position, wherein it makes contact with said second end (200b) of the tie rod (200);
and successively:
- translating said tie rod (200) from a retaining position, wherein it is configured to retain the tool, to a release position, wherein it is configured to release said tool;
wherein, during said step of moving the outer sleeve (500), said gasket (700) slides in contact with said inner sleeve (400) and said outer sleeve (500) intercepts the inner sleeve (400) causing the translation movement.
